# EUROPÄISCHE PATENTSCHRIFT

(11) **EP 1 167 250 B1**
(45) Veröffentlichungstag und Bekanntmachung des Hinweises auf die Patenterteilung: **17.09.2003**
(21) Anmeldenummer: 01106857.4
(22) Anmeldetag: 20.03.2001
(51) Int. Cl.: B65G 57/00, B65G 61/00, B62D 65/00, B21D 43/22, B21D 43/00

(54) **Stapelanlage für mittelgrosse Blechteile**
Stacking device for medium sized sheet metal pressings
Dispositif pour empiler des pièces en tôle de moyenne dimension

(30) Priorität: 17.06.2000 DE 10030003
(43) Veröffentlichungstag der Anmeldung: 02.01.2002
(73) Patentinhaber: ThyssenKrupp Drauz GmbH, 74076 Heilbronn (DE)
(72) Erfinder: Rohland, Jörg, 09119 Chemnitz (DE); Stein, Hans, 09358 Wüstenbrand (DE)
(74) Vertreter: Illing, Ralf, Dipl.-Jur. Ing.

(56) Entgegenhaltungen:
- EP-A- 0 434 096
- DE-A- 4 320 431
- DE-A- 19 952 688
- US-A- 4 777 783
- US-A- 5 632 588

## Beschreibung

Die Erfindung betrifft eine Stapelanlage für mittelgroße Blechteile, insbesondere Kfz-Karosserieteile, die mittels Transferpresse hergestellt werden, bestehend aus einem oder mehreren Klinkenspeichern mit zwei übereinander angeordneten verstellbaren Klinkenebenen, einer bis zum Klinkenspeicher verlängerten Transfereinrichtung der Transferpresse, einer unterhalb der letzten Transferstation angeordneten Hubeinrichtung für das Anheben der Blechteile in den Klinkenspeicher und einem über dem Klinkenspeicher angebrachten Industrieroboter.

Durch eine bekannte Lösung ist eine Stapelanlage geschaffen, die die hohe Stückleistung einer Transferstraße auch bei Mehrfachteilen ohne Verzögerung stapeln und abtransportieren kann (DE 199 52 688 A1).

Bei einer Umstellung der Transferpresse auf anders ausgebildete Blechteile bedarf es des schnellen Wechsels der Werkstückauflagen der verlängerten Transfereinrichtung und der Hubeinrichtung, des Klinkenspeichers und des Entnahmegreifers des Industrieroboters. Aus Gründen der Arbeitssicherheit darf dieser Wechsel nicht innerhalb der Stapelanlage erfolgen.

Es ist Aufgabe der Erfindung für die gattungsgemäße Lösung einen Werkzeugwechsel zu schaffen, bei dem der Wechsel der werkstückspezifischen Bauteile der Stapelanlage außerhalb der Stapelanlage mit minimalem Zeitaufwand erfolgen kann.

Die Aufgabe wird erfindungsgemäß durch die Merkmale des Patentanspruches 1 gelöst. Die Unteransprüche beschreiben vorteilhafte Teillösungen zum Patentanspruch 1 .

Durch die Anordnung der werkstückspezifischen Bauteile der Stapelanlage in einem in Transferrichtung verfahrbaren Wagen bzw. die Ablage des Entnahmegreifers des Industrieroboters beim Wechselvorgang darauf kann der Wechsel außerhalb der Stapelanlage erfolgen. Die quer zur Transferrichtung angeordnete Fahrschiene und deren Wechselschlitten mit zwei Senkrechtfördereinrichtungen schaffen die Voraussetzung für eine schnelle Entnahme der vorhandenen werkstückspezifischen Bauteile und ein schnelles Einwechseln von voreingestellten werkstückspezifischen Bauteilen für die anders ausgebildeten Blechteile.

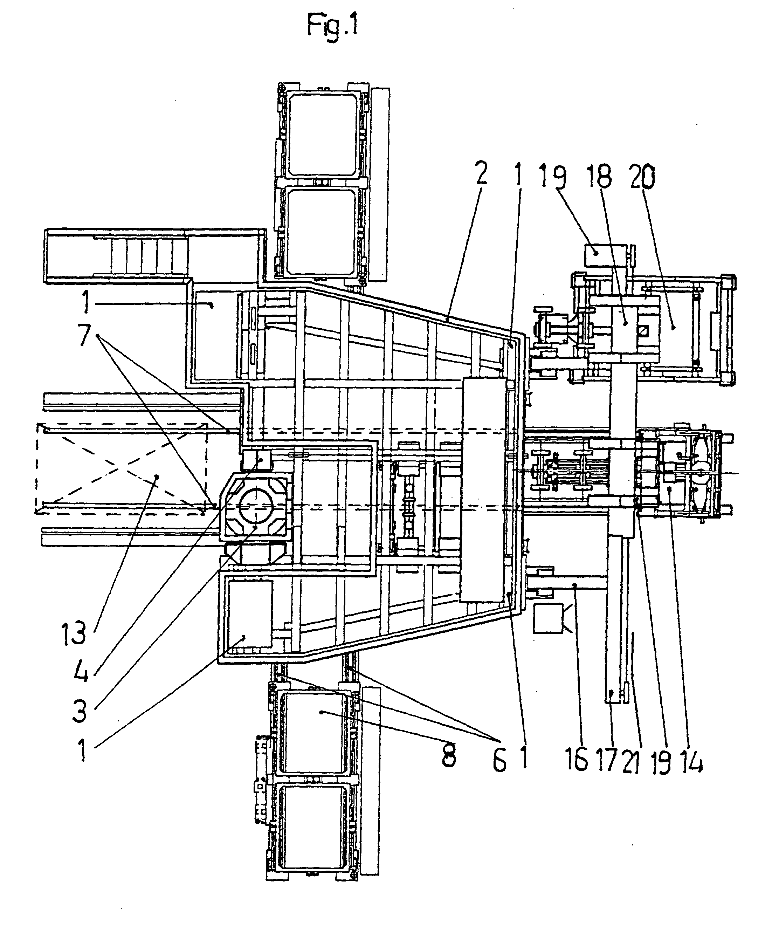

In der Zeichnung ist die Erfindung an einem Ausführungsbeispiel erläutert. Es zeigt
Fig.1 eine Draufsicht auf die Stapelanlage mit in der Wechselposition befindlichem Wagen,

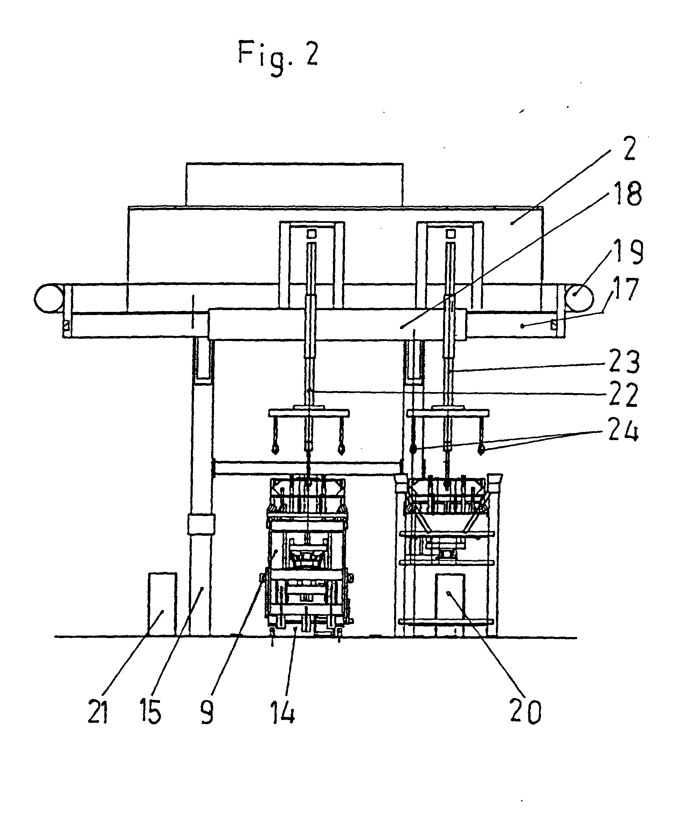

Fig.2 eine Vorderansicht auf die Wechselposition und

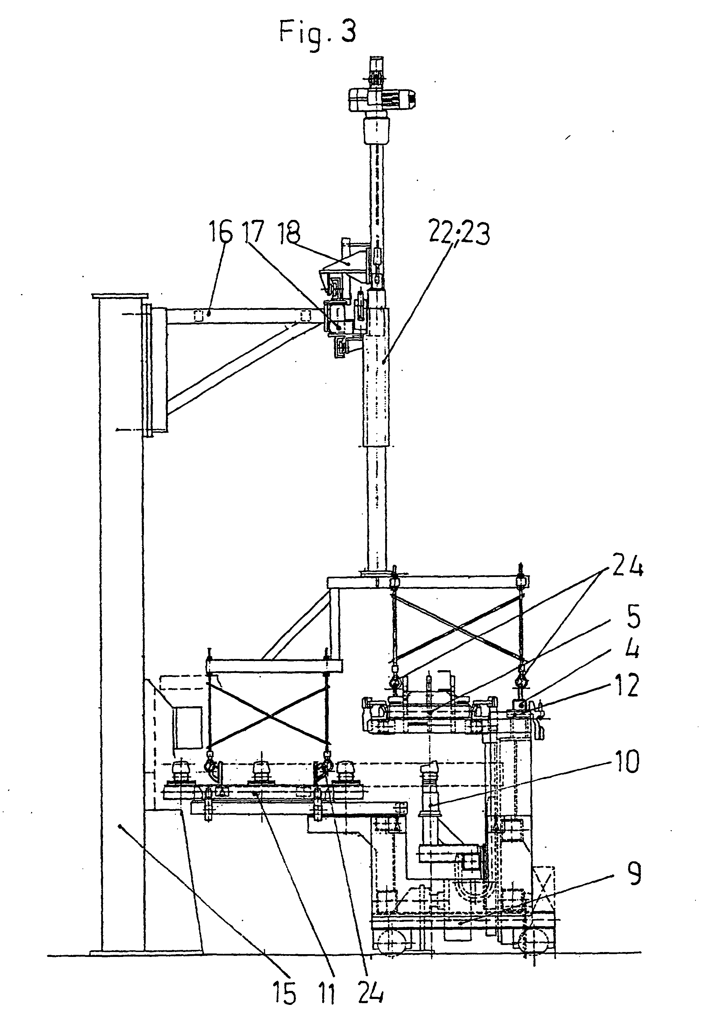

Fig.3 eine Seitenansicht des Wagens.

Die Stapelanlage besteht aus mehreren Ständern 1, die eine Bühne 2 tragen, an der nach unten hängend ein Industrieroboter 3 mit einem Entnahmegreifer 4 für einen Klinkenspeicher 5 befestigt ist. Zwischen den Ständern 1 verlaufen, sich rechtwinklig kreuzend, zwei Schienenpaare 6;7, die am Hallenboden befestigt sind. Rechtwinklig zur Transferrichtung der Presse verläuft das Schienenpaar 6 für die Transportwagen 8 der Transportbehälter und parallel zur Transferrichtung das Schienenpaar 7 für einen Wagen 9, in und an dem der Klinkenspeicher 5 und seine Hubeinrichtung 10 sowie die Verlängerung der Transfereinrichtung 11 der Presse gemäß Hauptpatent 199 52 688.5 leicht wechselbar befestigt sind. Die Oberseite des Wagens 9 ist außerdem mit einer Ablagefläche 12 für den Entnahmegreifer 4 des Industrieroboters 3 versehen. Die in einer Energieführungsvorrichtung gelagerten Energieführungs-Leitungen für den Antrieb der Hubeinrichtung 10 und die Betätigung der Klemmeinrichtungen sowie Steuerleitungen für Kontrollgeräte enden an den entsprechenden Baugruppen im Wagen 9. Am Schienenpaar 7 für den Wagen 9 befinden sich in der Arbeits- und der Wechselposition des Wagens 9 Positionier- und Klemmvorrichtungen für den Wagen 9. Weiterhin befindet sich zwischen dem Schienenpaar 7 ein nichtgezeichneter Fahrantrieb für den Wagen 9 zum Bewegen zwischen Arbeits- und Wechselposition 13;14. An der der Transferpresse abgewandten Seite der Bühne 2 sind beidseitig des Schienenpaares 7 für den Wagen 9 je ein am Hallenboden befestigter Ständer 15 angebracht, der mit von der Bühne 2 weg zeigenden Auslegern 16 versehen sind. Die Ausleger 16 sind etwa in Höhe der Bühne 2 angebracht und tragen an ihren freien Enden eine rechtwinklig zur Transferrichtung verlaufende Fahrschiene 17. Auf dieser ist ein Wechselschlitten 18 gelagert, der durch einen Antrieb 19 in die Wechselposition 14 und die Ablagepositionen 20;21 verfahrbar ist. Die Wechselposition 14 befindet sich über dem Schienenpaar 7 für den Wagen 9. Je eine der Ablagepositionen 20;21 ist rechts und links neben der Wechselposition 14 angeordnet. An der Vorderseite des Wechselschlittens 18 sind zwei Senkrechtfördereinrichtungen 22;23 angebracht. Ihr seitlicher Abstand ist so gewählt, dass eine der Senkrechtfördereinrichtungen 22 mittig über der Wechselposition 14 und die andere (23) mittig über einer Ablageposition 20;21 angebracht sind. Beide Senkrechtfördereinrichtungen 22;23 sind an ihrem unteren freien Ende mit Greifern 24 versehen, die die Werkstückauflagen der verlängerten Transfereinrichtung 11 und der Hubeinrichtung 10, den Klinkenspeicher 5 und den Entnahmegreifer 4 erfassen. Auf einer Ablageposition 20 sind manuell die einzuwechselnden Bauteile und Baugruppen voreingestellt abgelegt. Die auszuwechselnden Bauteile und Baugruppen werden durch den Wagen 9 in die Wechselposition 14 gebracht. Durch die Anordnung der Wechselposition 14 außerhalb vor der Bühne 2 erfolgt der Wechselvorgang außerhalb der durch Lichtschranken begrenzten Sicherheitszone der Transferpresse und erfüllt dadurch die entsprechenden Sicherheitsvorschriften.

Die Arbeitsweise ist folgende:
Im Falle der Umrüstung der Transferpresse auf anders ausgebildete Blechteile befindet sich der Wagen 9 in der Arbeitsposition 13. Er ist dort positioniert und geklemmt. Außerdem sind alle auszuwechselnden Bauteile und Baugruppen geklemmt. Die Positionierung und alle Klemmungen werden gelöst und gleichzeitig wird der Wagen 9 durch seinen Antrieb auf dem Schienenpaar 7 in die Wechselposition 14 verfahren und dort erneut positioniert und geklemmt. In dieser Phase befindet sich der Wechselschlitten 18 auf der Fahrschiene 17 in einer Position, bei der sich eine Senkrechtfördereinrichtung 22 über der Wechselposition 14 und die andere Senkrechtfördereinrichtung 23 sich über der Ablageposition 20 mit den einzuwechselnden Bauteilen und Baugruppen befindet. Deren Greifer 24 werden gleichzeitig auf die auszuwechselnden und einzuwechselnden Bauteile und Baugruppen abgesenkt und fassen diese. Nun werden beide Senkrechtfördereinrichtungen 22;23 gleichzeitig nach oben gefahren und der Wechselschlitten 18 so weit verfahren, dass der Greifer 24 mit den einzuwechselnden Bauteilen und Baugruppen sich über der Wechselposition 14 und der Greifer 24 mit den auszuwechselnden Bauteilen und Baugruppen über der anderen Ablageposition 21 befindet. Dort werden beide Greifer 24 gleichzeitig abgesenkt bis die Bauteile und Baugruppen auf ihrer jeweiligen Auflage liegen. Die Greifer 24 werden geöffnet und hochgefahren. Der Wagen 9 wird mittels seines Antriebes in seine Arbeitsposition 13 verfahren, dort positioniert und geklemmt. Gleichzeitig werden alle gewechselten Bauteile und -gruppen geklemmt. Zu diesem Zeitpunkt ist die Stapelanlage zur Aufnahme der anders ausgebildeten Blechteile bereit.

Während der Produktion dieser Blechteile wird der Wechselschlitten 18 mit den Senkrechtfördereinrichtungen 22;23 in die entgegengesetzte Position verfahren. Die ausgewechselten Bauteile und -gruppen werden manuell entnommen und abtransportiert und neu einzuwechselnde Bauteile und -gruppen in der anderen Ablageposition 20 voreingestellt eingelegt. Äquivalent zu den beiden Senkrechtfördereinrichtungen 22;23 ist eine nicht dargestellte Senkrechtfördereinrichtung, an deren freiem nach unten zeigenden Ende sich ein schwenkbarer Doppelarm befindet. An jedem Ende des Doppelarmes ist ein Greifer angebracht. Bei diesem Arbeitsablauf tritt an Stelle der Schlittenverschiebung eine Schwenkbewegung des Doppelarmes um 180 Grad.

Die Steuerung der Bewegungsabläufe zum Wechsel der Bauteile und -gruppen ist als an sich bekannte elektronische Ablaufsteuerung ausgeführt. Sie wird manuell zum Zeitpunkt der Umstellung der Transferpresse eingeschaltet und führt alle Abläufe bis zur Bereit-Meldung nach Abschluss aller Bewegungsabläufe aus. Da der Wechsel außerhalb der Sicherheitszone erfolgt, ist es jedoch auch möglich, das eine oder andere schwer zugängliche Bauteil aus Zeit- oder Kostengründen manuell zu wechseln.

### Aufstellung der Bezugszahlen

- 1: Ständer
- 2: Bühne
- 3: Industrieroboter
- 4: Entnahmegreifer
- 5: Klinkenspeicher
- 6: Schienenpaar
- 7: Schienenpaar
- 8: Transportwagen
- 9: Wagen
- 10: Hubeinrichtung
- 11: Verlängerung der Transfereinrichtung
- 12: Ablagefläche
- 13: Arbeitsposition
- 14: Wechselposition
- 15: Ständer
- 16: Ausleger
- 17: Fahrschiene
- 18: Wechselschlitten
- 19: Antrieb
- 20: Ablageposition
- 21: Ablageposition
- 22: Senkrechtfördereinrichtung
- 23: Senkrechtfördereinrichtung
- 24: Greifer

## Patentansprüche

1. Stapelanlage für mittelgroße Blechteile, insbesondere Kfz-Karosserieteile, die mittels Transferpresse hergestellt werden, bestehend aus einem oder mehreren Klinkenspeichern (5) mit zwei übereinander angeordneten verstellbaren Klinkenebenen, einer bis zum Klinkenspeicher verlängerten Transfereinrichtung (11) der Transferpresse, einer unterhalb der letzten Transferstation angeordneten Hubeinrichtung (10) für das Anheben der Blechteile in den Klinkenspeicher und einem über dem Klinkenspeicher angebrachten Industrieroboter (3),
**dadurch gekennzeichnet,**
**dass** die Werkstückauflagen der verlängerten Transfereinrichtung (11) und der Hubeinrichtung (10), die Hubeinrichtung (10), der Klinkenspeicher (5) und der Entnahmegreifer (4) des Industrieroboters (3) in oder auf einem in Transferrichtung verfahrbaren Wagen (9) schnell wechselbar angeordnet sind,
**dass** der Wagen (9) in eine Arbeitsposition (13) oder in eine Wechselposition (14) verfahrbar ist und dass über der Wechselposition (14) quer zur Transferrichtung eine Fahrschiene (17) angeordnet ist, auf der ein Wechselschlitten (18) verfahrbar gelagert ist, der zwei Senkrechtfördereinrichtungen (22;23) trägt, die an ihren unteren freien Enden mit Greifern (24) für die Werkstückauflagen der verlängerten Transfereinrichtung (11) und der Hubeinrichtung (10), für die Hubeinrichtung (10), für den Klinkenspeicher (5) und der Entnahmegreifer (4) des Industrieroboters (3) versehen sind.

2. Stapelanlage nach Anspruch 1,
**dadurch gekennzeichnet,**
**dass** rechts und links neben der Wechselposition (14) unter der Fahrschiene (17) Ablagepositionen (20;21) für neu voreingestellte Werkstückauflagen, Hubeinrichtung (10), Klinkenspeicher (5) und Entnahmegreifer (4) oder ausgewechselte Werkstückauflagen, Hubeinrichtungen (10), Klinkenspeicher (5) und Entnahmegreifer (4) angeordnet sind.

3. Stapelanlage nach den Ansprüchen 1 und 2,
**dadurch gekennzeichnet,**
**dass** eine Senkrechtfördereinrichtung angeordnet ist, die an ihrem unteren freien Ende einen um 180 Grad schwenkbaren Doppelarm trägt, der an jedem Ende Greifer für die Werkstückauflagen, für die Hubeinrichtung (10), für den Klinkenspeicher (5) und für den Entnahmegreifer (4) trägt.

## Claims

1. Stacking installation for medium-sized sheet-metal parts, in particular motor-vehicle bodywork parts, which are produced by means of a transfer press, comprising one or more pawl-type stores (5), with two adjustable pawl planes arranged one above the other, a transfer arrangement (11) which is extended as far as the pawl-type store and belongs to the transfer press, a lifting arrangement (10), which is arranged beneath the final transfer station and is intended for raising the sheet-metal parts into the pawl-type store, and an industrial robot (3), which is fitted above the pawl-type store, **characterized in that** the workpiece supports of the extended transfer arrangement (11) and of the lifting arrangement (10), and also the lifting arrangement (10), the pawl-type store (5) and the removal gripper (4) of the industrial robot (3) are arranged for quick changeover in or on a carriage (9) which can be displaced in the transfer direction, **in that** the carriage (9) can be displaced into an operating position (13) or into a changeover position (14), and **in that** arranged above the changeover position (14), transversely to the transfer direction, is a running rail (17) on which is mounted in a displaceable manner a changeover slide (18), which bears two vertical conveying arrangements (22; 23) which, at their bottom free ends, are provided with grippers (24) for the workpiece supports of the extended transfer arrangement (11) and of the lifting arrangement (10), for the lifting arrangement (10), for the pawl-type store (5) and for the removal gripper (4) of the industrial robot (3).

2. Stacking installation according to Claim 1, **characterized in that** depositing positions (20; 21) for newly pre-set workpiece supports, the lifting arrangement (10), pawl-type store (5) and removal gripper (4) or exchanged workpiece supports, lifting arrangements (10), pawl-type stores (5) and removal gripper (4) are arranged beneath the running rail (17), to the right and left alongside the changeover position (14).

3. Stacking installation according to Claims 1 and 2, **characterized by** the provision of a vertical conveying arrangement which, at its bottom free end, bears a double arm which can be pivoted through 180 degrees and, at each end, bears grippers for the workpiece supports, for the lifting arrangement (10), for the pawl-type store (5) and for the removal gripper (4).

## Revendications

1. Installation pour empiler des pièces en tôle de moyenne dimension, en particulier des pièces de carrosserie de véhicules automobiles, qui sont fabriquées au moyen d'une presse transfert, se composant d'une ou de plusieurs unités de stockage de cliquets (5) avec deux plans de cliquets réglables disposés l'un au-dessus de l'autre, d'un dispositif de transfert (11) de la presse transfert se prolongeant jusqu'à l'unité de stockage de cliquets, d'un dispositif de levage (10) disposé en dessous du dernier poste de transfert pour soulever les pièces en tôle dans l'unité de stockage de cliquets et d'un robot industriel (3) monté au-dessus de l'unité de stockage de cliquets,
**caractérisée en ce que**
les supports de pièces du dispositif de transfert prolongé (11) et du dispositif de levage (10), le dispositif de levage (10), l'unité de stockage de cliquets (5) et le dispositif de préhension de prélèvement (4) du robot industriel (3) sont disposés dans ou sur un chariot (9) déplaçable dans la direction de transfert, de manière à pouvoir être rapidement remplacés,
**en ce que** le chariot (9) peut être déplacé dans une position de travail (13) ou dans une position de remplacement (14) et **en ce qu'**un rail de transport (17) est prévu au-dessus de la position de remplacement (14) transversalement à la direction de transfert, sur lequel un glissoir de remplacement (18) est monté de manière déplaçable, et porte deux dispositifs de transport vertical (22 ; 23) qui sont pourvus, à leurs extrémités libres inférieures, de dispositifs de préhension (24) pour les supports de pièces du dispositif de transfert prolongé (11) et du dispositif de levage (10), pour le dispositif de levage (10), pour l'unité de stockage de cliquets (5) et le dispositif de préhension de prélèvement (4) du robot industriel (3).

2. Installation d'empilage selon la revendication 1, **caractérisée en ce qu'**à droite et à gauche à côté de la position de remplacement (14), sous le rail de transport (17), sont prévues des positions de dépôt (20 ; 21) pour de nouveaux supports de pièces préajustés, pour le dispositif de levage (10), l'unité de stockage de cliquets (5) et le dispositif de préhension de prélèvement (4) ou pour des supports de pièces remplacés, des dispositifs de levage (10), des unités de stockage de cliquets (5) et des dispositifs de préhension de prélèvement (4).

3. Installation d'empilage selon les revendications 1 et 2, **caractérisée en ce qu'**il est prévu un dispositif de transport vertical qui porte, à son extrémité libre inférieure, un double bras pouvant pivoter de 180 degrés, qui porte à chaque extrémité des dispositifs de préhension pour les supports de pièces, pour le dispositif de levage (10), pour l'unité de stockage de cliquets (5) et pour le dispositif de préhension de prélèvement (4).
